# EUROPEAN PATENT APPLICATION

(11) **EP 3 816 799 A1**
(43) Date of publication of application: **05.05.2021**
(21) Application number: 19205771.9
(22) Date of filing: 29.10.2019
(51) Int. Cl.: G06F 9/50

(54) **CIRCUIT, CHARGING CIRCUIT, APPARATUS FOR A SERVER, AND CIRCUIT FOR A DEVICE FOR SHARING PROCESSING RESOURCES OF A VEHICLE, SYSTEMS, METHODS, AND COMPUTER PROGRAMS**

(71) Applicant: Bayerische Motoren Werke Aktiengesellschaft, 80809 München (DE)
(72) Inventor: Batir, Sean, Mountain View, CA California 94043 (US); Langton, Adam, San Francisco, CA California 94129 (US); McComb, Lowell, 80803 München (DE); Pease, Henry, San Francisco, CA California 94117 (US)

(57) **Abstract**

A circuit (10) for sharing processing resources of a vehicle (100; 1002), comprising:
one or more interfaces (12) configured to connect to a charging circuit (20) for the vehicle (100; 1002) and to communicate with a server entity (30); and a control module (14) configured to: control processing resources of the vehicle (100; 1002); receive a request for providing processing resources using the one or more interfaces (12); estimate available processing capacities of the vehicle (100; 1002); and provide available processing capacities of the vehicle (100; 1002) for an external processing task while being connected to the charging circuit (20).

## Description

### Field

Examples of the present disclosure relate to a concept for sharing processing resources of a vehicle. More particularly but not exclusively, to a circuit, a charging circuit, an apparatus for a server, and a circuit for a device for sharing processing resources of a vehicle and accordingly configured system, methods, and computer programs.

### Background

In the prior art resource sharing concepts are known that use decentralized resource sharing. For example, a blockchain concept may seek to tokenize and decentralize graphics processing unit (GPU) resource sharing. Graphics processing units (GPUs) are specialized computer chips that possess thousands of cores to perform millions of matrix multiplication operations that are required for simulation, rendering, and deep learning.

Some computer systems may host a plurality of remote client applications to which a network connection is maintained. Resources of a graphics processing unit of the computer system may be allocated to remote client applications, which may concurrently utilize the resources of the graphics processing unit of the computer system. A graphical output of the application instances may then be transmitted to the respective client using the network connections.

There is a demand for an improved concept for resource sharing.

### Summary

This demand is addressed by the subject-matter of the independent claims. Further examples are addressed by the dependent claims.

Examples are based on the finding that GPUs are often both expensive and under-utilized. In parallel, the roll-out of increased autonomous vehicles in the next decade creates a context ripe for exploitation of future GPUs that will be released in upcoming fleets. Taking a long-term strategy, examples may enable both saving cost and increasing efficiency by leveraging the power of distributed GPUs. As future cars are intended to possess an electric, chargeable component, these two upcoming trends are synthesized by examples that will allow developing an additional revenue stream allowing users of the fleet to access vast, GPU computational resources that are otherwise taken for granted.

An example relates to a circuit for sharing processing resources of a vehicle. The circuit comprises one or more interfaces, which are configured to connect to a charging circuit for the vehicle and to communicate with a server entity. The circuit further comprises a control module, which is configured to control processing resources of the vehicle. The control module is further configured to receive a request for providing processing resources using the one or more interfaces and to estimate available processing capacities of the vehicle. Furthermore, the control module is configured to provide available processing capacities of the vehicle for an external processing task while being connected to the charging circuit.

Examples may enable the sharing of processing resources of a vehicle that is being charged. As the charging of vehicles consumes longer time periods examples may enable access to resources that would otherwise be unused.

In another example, the one or more interfaces are configured to establish a wired connection to the circuit while charging. The one or more interfaces may be further configured to communicate a data stream and information on an updated state of the available processing capacities through the wired connection.

The wired connection between the circuit for sharing processing resources of the vehicle and the charging circuit may enable reliable communication and data transfers besides charging a battery of the vehicle. Information on the (updated) state of the processing capacities may be sent to the charging circuit. The data stream may allow high bandwidth data transfers. The wired connection may enable a reliable and high bandwidth access connection to make spare resources of the vehicle available.

In a further example, the processing resources are provided by at least one element of the group of a central processing unit, a graphics processing unit and an arithmetic logic unit. Examples may enable sharing of different kinds of processing resources of a vehicle.

In an additional example, the external processing task is at least one element of the group of calculations, machine learning, deep learning, graphics rendering, simulations, computer vision and high-performance computation. Examples may enable processing resources of a vehicle for different types of processing tasks.

Examples also provide a charging circuit for a charging station. The charging station comprises one or more interfaces, which are configured to connect to a circuit for sharing processing resources of a vehicle while charging a battery of the vehicle and to communicate with an apparatus for a server. The charging station further comprises a control module, which is configured to forward a request for providing processing resources from the apparatus to the circuit for sharing processing resources using the one or more interfaces. The control module is further configured to forward information on available processing capacities of the vehicle from the circuit for sharing processing resources to the apparatus for the server using the one or more interfaces. Further, the control module is configured to forward information on a processing task from the apparatus for a server to the circuit for sharing processing resources using the one or more interfaces.

The charging circuit for the charging station may be a data transmission and communication interface between the vehicle and the server. During charging the battery, the vehicle is connected to the server via the charging circuit. Information on resource availability, processing task assignment, data exchange, etc. may be relayed by the charging station.

In an example, the control module may be further configured to forward information on results of the processing task from the circuit for sharing processing resources to the apparatus for the server. In examples the charging circuit may further relay processing results.

In case a processing task is performed by the processing resources of the vehicle, the charging circuit may check a state of the task to be processed and may send corresponding information to the server. The charging circuit may report state changes to the server in some examples.

Another example relates to an apparatus for a server and for assigning available processing capacities of charging vehicles. The apparatus for the server comprises one or more interfaces, which are configured to communicate with a charging circuit and with a circuit requesting a provision of processing resources. The apparatus for the server further comprises a control module, which is configured to receive a request for available processing resources from the circuit requesting a provision of processing resources using the one or more interfaces. The control module is further configured to receive information on available processing capacities from a circuit for sharing processing resources via the charging circuit using the one or more interfaces. The control module is further configured to predict at which time processing capacities from the circuit for sharing processing resources are available based on previously received information on available processing capacities. Furthermore, the control module is configured to assign available processing capacities from the circuit for sharing processing resources to the circuit for using processing resources using the one or more interfaces.

Examples may enable reliable prediction on available processing resources. Charging cycles of vehicles tend to have a high regularity. Therewith, availability of their processing resource may be predicted in a reliable way. The apparatus may predict at which time processing capacities from a circuit for sharing processing resources of a vehicle may be available based on previously received information on available processing capacities. Thus, the apparatus for the server may be a central point in order to realize the concept of sharing the processing resources of the vehicles in some examples.

In an example, the time for predicted available processing capacities is based on statistics of charging times of the vehicle. From statistics information on a date when a certain vehicle may usually start charging and information on how long it may be charging can be extracted. With this information the apparatus may enable reliable prediction in examples.

In another example, the control module is further configured to generate a first channel for data transmissions of user-defined requests from the circuit for using processing resources to the apparatus for the server. Further, the control module is configured to map the requests for available processing capacities on a list comprising the available processing capacities. Furthermore, the control module is configured to generate a second channel for a user-defined operation performed by the available processing resources of the vehicle based on the mapped requests. The control module is further configured to add a security layer to accommodate user privacy and anonymity for the circuit for sharing processing resources and the circuit for using processing resources during data transmissions and provision of the user-defined operations.

Generating a first channel for received user-defined requests, mapping the requests and generating a second channel for data transmissions of user-defined operations may improve the assignment process of the available processing capacities.

In an example, the control module is further configured to receive information on a compensation from the circuit for using processing resources. Further, the control module is configured to provide available processing capacities for user-defined operations in response to the received information on the compensation. Furthermore, the control module is configured to provide information on a fraction of the compensation to the circuit for sharing processing resources of the vehicle and provide information on another fraction of the compensation to a service provider. Examples may enable compensation sharing.

A further example relates to a circuit for a device and for using processing resources of a vehicle. The circuit for using processing resources comprises one or more interfaces, which are configured to communicate with an apparatus for a server. The circuit for using processing resources further comprises a control module. The control module is configured to transmit a request for processing capacities to the apparatus for a server using the one or more interfaces. The control module is further configured to receive information on available processing capacities of a vehicle from the apparatus for a server using the one or more interfaces. Further, the control module is configured to use provided available processing capacities for a user-defined operation using the one or more interfaces.

The circuit for a device and for using processing resources of a vehicle enables a user to use available processing capacities to perform a user-defined operation. Examples may enhance the device with provision of additional (external) processing resources.

In an example, the request for processing capacities is transmitted if the processing resources of the circuit for using processing resources are overloaded. Examples may improve overload situations of the devices by provision of additional processing resources.

In case the processing resources of the circuit are overloaded a request for further processing resources may automatically be transmitted in order to continue the running user-defined operation.

The device may be a vehicle, an electric vehicle, a computer, a tablet, a smartphone or a TV. The circuit for the device and for using processing resources of a vehicle may be any kind of hardware needing processing capabilities being able to perform user-defined operations.

Another example relates to a method for sharing processing resources of a vehicle. The method comprises controlling processing resources of the vehicle, receiving a request on processing resources, estimating available processing capacities of the vehicle, and providing available processing capacities of the vehicle for an external processing task while being connected to the charging circuit.

Another example relates to a method for charging and sharing processing resources. The method comprises forwarding a request for providing processing resources from an apparatus for a server to a circuit for sharing processing resources of the vehicle, forwarding information on available processing capacities of the vehicle to the apparatus for the server, and forwarding information on a processing task from the apparatus for the server to the circuit for sharing resources of the vehicle.

An additional example relates to a method for assigning available processing capacities of charging vehicles. The method comprises receiving a request on the provision of processing resources from a requesting circuit, receiving information on available processing capacities from a providing circuit, predicting at which time processing capacities from the providing circuit are available based on previously received information on available processing capacities, and assigning available processing capacities from the providing circuit for sharing processing resources to the requesting circuit for using processing resources.

Another example relates to a method for using processing resources of a vehicle. The method comprises sending a request for processing capacities to an apparatus at a server, receiving information on available processing capacities of the vehicle from the apparatus for a server, and using provided available processing capacities for a user-defined operation.

Examples further provide a computer program having a program code for performing one or more of the described methods, when the computer program is executed on a computer, processor, or programmable hardware component. A further example is a computer readable storage medium storing instructions which, when executed by a computer, processor, or programmable hardware component, cause the computer to implement one of the methods described herein.

### Brief description of the Figures

Some other features or aspects will be described using the following non-limiting examples of apparatuses or methods or computer programs or computer program products and with reference to the accompanying figures, in which:
Fig. 1 illustrates a schematic drawing of an example of a circuit for sharing processing resources of a vehicle;
Fig. 2 illustrates a schematic drawing of an example of a charging circuit for a charging station;
Fig. 3 illustrates a schematic drawing of an example of an apparatus for a server and for assigning available processing capacities of charging vehicles;
Fig. 4 illustrates a schematic drawing of an example of a circuit for a device and for using processing resources of a vehicle;
Fig. 5 illustrates a schematic drawing of an example of a system for sharing processing resources;
Fig. 6 illustrates a flowchart describing an example of a method for sharing processing resources of a vehicle;
Fig. 7 illustrates a flowchart describing an example of a method for charging and sharing processing resources;
Fig. 8 illustrates a flowchart describing an example of a method for assigning available processing capacities of charging vehicles;
Fig. 9 illustrates a flowchart describing an example of a method for using processing resources of a vehicle;
Fig. 10 schematically illustrates an example of a system for sharing processing resources of vehicles;
Fig. 11 schematically illustrates an example of a method for sharing processing resources of vehicles; and
Fig. 12 schematically illustrates an example of a method for assigning resources of a vehicles to users.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

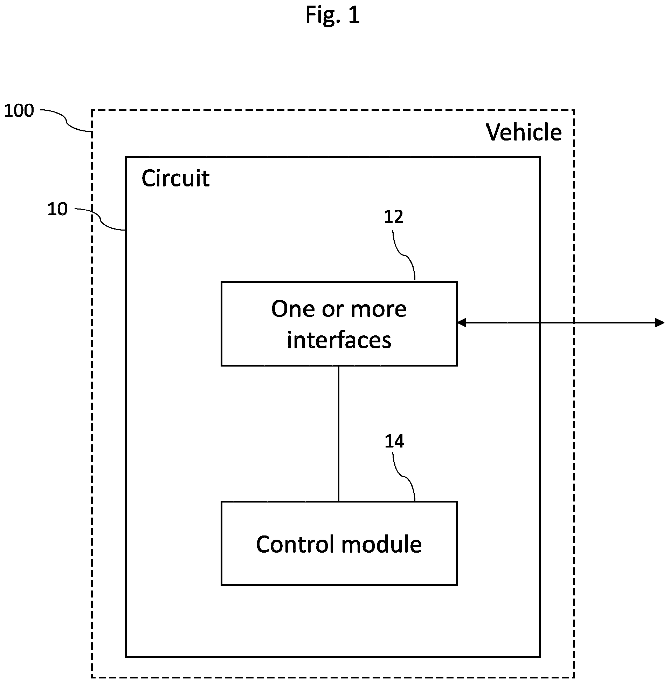

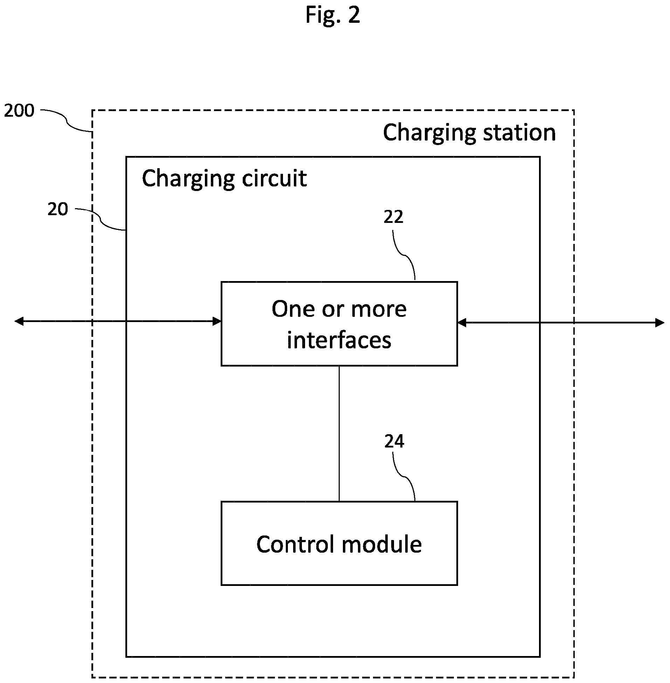

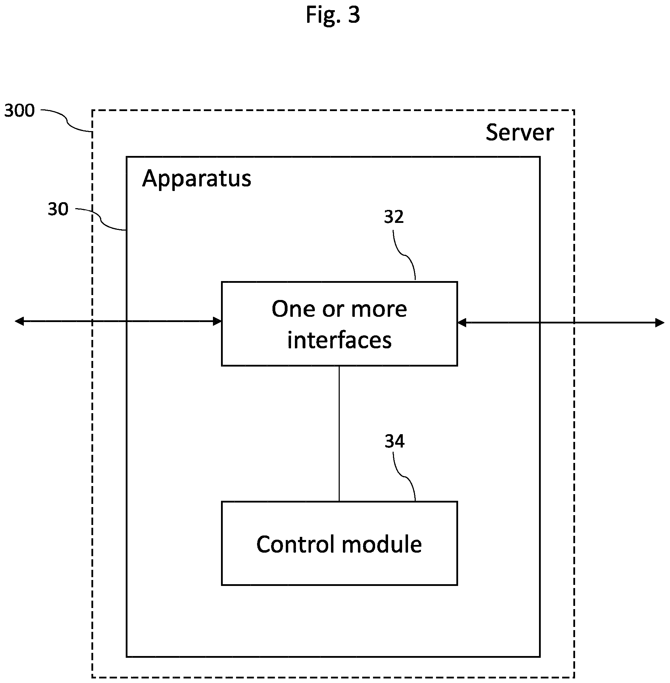

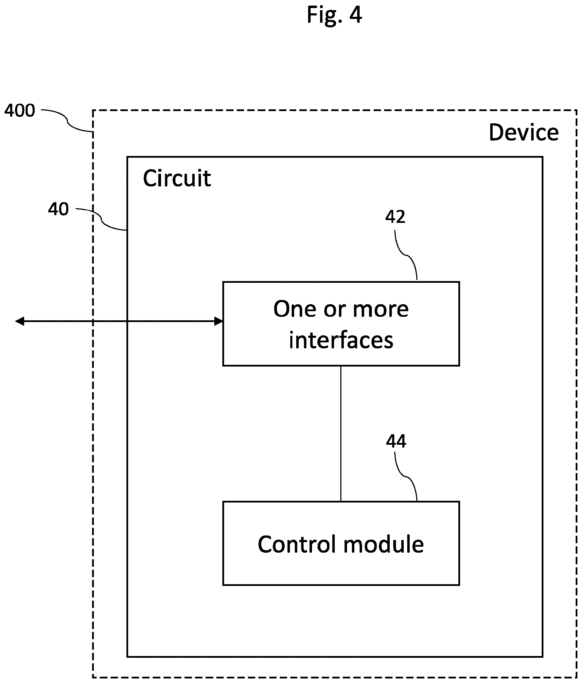

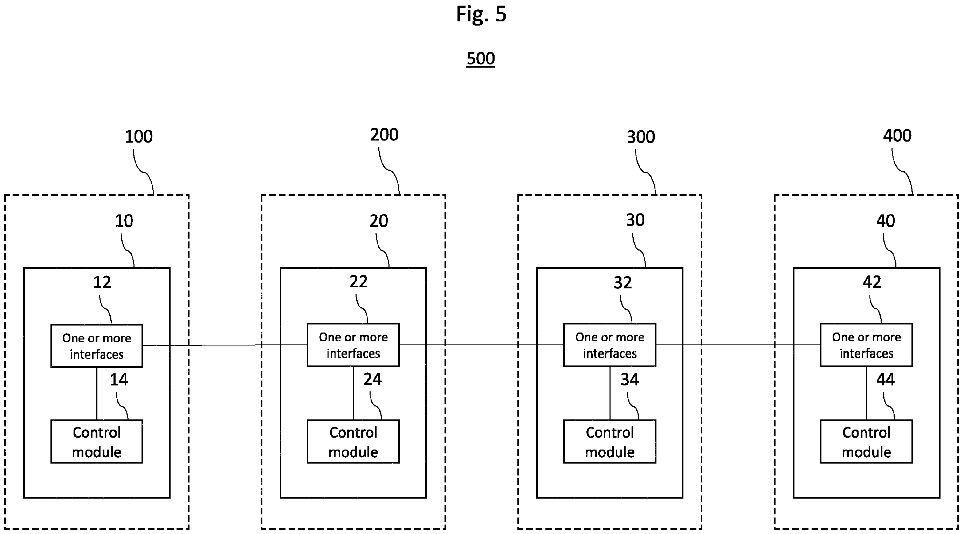

In the following, an example of a circuit 10 for sharing processing resources of a vehicle 100 will be described using Fig. 1, an example of a charging circuit 20 for a charging station 200 will be described using Fig. 2, an example of an apparatus 30 for a server 300 and for assigning available processing capacities of charging vehicles 100 will be described using Fig. 3, and an example of a circuit 40 for a device 400 and for using processing resources will be described using Fig. 4. Fig. 5 may serve as an overview.

Fig. 1 shows an example of a circuit 10 for sharing processing resources of a vehicle 100. Fig. 1 further illustrates an optional example of a vehicle 100 comprising the example of the circuit 10 (optional components are shown using broken lines throughout the Figs.). The circuit 10 comprises one or more interfaces 12, which are configured to connect to a charging circuit 20 for the vehicle 100. The one or more interfaces are further configured to communicate with an apparatus 30 for a server 300. The circuit 10 further comprises a control module 14, which is coupled to the one or more interfaces 12. The control module 14 is configured to control processing resources of the vehicle 100. The control module 14 is further configured to receive a request for providing processing resources using the one or more interfaces 12, and to estimate available processing capacities of the vehicle 100. The control module 14 is configured to provide available processing capacities of the vehicle 100 for an external processing task while being connected to the charging circuit 20.

In other words, the circuit 10 for sharing processing resources of a vehicle 100 may comprise one or more interfaces 12 and a control module 14. The vehicle 100 may be an electric car or a hybrid car, truck, train, scooter, bike, boat, etc. The vehicle 100 may be connected to a charging circuit 20 for a charging station 200 via the one or more interfaces 12. The connection to the charging circuit 22 may be a wired connection. The wired connection may include both an electrical connection between the circuit 10 and the circuit 20 for charging a battery of the vehicle 100 and a communication link. The electrical connection may be a cable being able to provide fast charging. Further, the one or more interfaces 12 may include a data connection between the circuit 10 and the circuit 20 enabling communication and data transfer or data streaming. The data transfer may enable a forwarding of information on different states and properties of the vehicle 100 like, for example, the state of the processing resources or resource capacities. The processing resources may be provided by a central processing unit (CPU), a graphics processing unit (GPU) or an arithmetic logic unit (ALU) including both a CPU and a GPU.

In examples, the processing resources or capacities may be indicated using different metrics, such as a number of processors, a number of processing cores, a number of threads, a number of instructions, etc., which can be related to an according time frame, e.g. per second, minute, etc.

In the Figs. lines or arrows between the components or entities indicate information communicated with other respective entities. Fig. 5 shows an overview. Such information may comprise request messages (e.g. on resources or capabilities), status messages (e.g. available resources/capabilities, progress of a processed task), information on processing results, information on processing tasks, etc.

The processing resources may be able to perform calculations, graphics rendering, machine learning, deep learning, simulations, computer vision, high-performance computation or even video games, e.g. using a high end graphics engine. Coming back to the data stream provided by the wired connection between the circuit 10 and the circuit 20, the data stream may further enable streaming videos like movies or live broadcasting of an event. The data stream may further enable a streaming service for providing rendered and calculated applications like games or complex three-dimensional simulations to a screen or a TV. By use of such a service, the end-user looking to a TV or a screen may not necessarily own a computer performing this kind of applications.

As stated above, the circuit 10 may further comprise the control module 14. The control module 14 may control the processing resources of the vehicle 100, like CPUs, GPUs and ALUs. Controlling the processing resources may be to switch them on/off, to assign processing tasks to them, e.g. to perform a user-defined application or operation, and to shut them down after finishing their calculations. The control module 14 may further receive requests for providing said processing resources to a user transmitting the request. These requests may include information on a user-defined operation, which the user wants to be performed by the processing resources of the vehicle 100. Before providing the processing resources in response to a user's request, the control module 14 may estimate available processing resources or processing capacities of the vehicle 100. In case, the estimated processing capacities of the vehicle 100 are sufficient to perform the user-defined operation, the processing resources of the vehicle 100 may be provided to the user in response to his request.

Fig. 2 shows an example of a charging circuit 20 for a charging station 200. Fig. 2 further illustrates an optional example of a charging station 200 comprising the example of the charging circuit 20. The charging circuit 20 comprises one or more interfaces 22, which are configured to connect to a circuit 10 (see Fig. 1) for sharing processing resources of a vehicle 100 while charging a battery of the vehicle 100. The one or more interfaces 22 are further configured to communicate with an apparatus 30 for a server 300 (see Fig. 3). The charging circuit 20 further comprises a control module 24, which is coupled to the one or more interfaces 22. The control module 24 is configured to forward a request for providing processing resources from the apparatus 30 to the circuit 10 using the one or more interfaces 22. The control module 24 is configured to forward information on available processing capacities of the vehicle 100 from the circuit 10 to the apparatus 30 using the one or more interfaces 22. Further, the control module 24 may forward information on a processing task from the apparatus 30 to the circuit 10 using the one or more interfaces 22.

In other words, the charging circuit 20 for a charging station 200 comprises one or more interfaces 22 and a control module 24. Via the one or more interfaces 22, the charging circuit 20 may be connected to the vehicle 100 and to the apparatus 30 for a server 300. The connection between the circuit 10 and the charging circuit 20 may be a wired connection, for charging a battery of the vehicle and for communicating while charging the battery of the vehicle 100. The electrical connection may be a cable being able to provide fast charging, e.g. high current/voltage to enable energy transfer in a reasonable time. Further, the one or more interfaces 22 may include a data connection between the circuit 10 and the circuit 20 enabling communication and data transfer or data stream. The data transfer may enable forwarding information on different states and properties of the vehicle 100 like, for example, the state of the processing resources or resource capacities. The processing resources may be CPUs, GPUs or ALUs including both a CPU and a GPU.

As stated above, the charging circuit 20 may also be connected to the apparatus 30. The connection may be a wired or a wireless connection via the internet. The connection between the charging circuit 20 and the apparatus 30 may provide a communication link between the charging circuit 20 and the apparatus 30. This connection may enable receiving, sending, and forwarding updated information. In this way, the charging circuit 20 represents an interface for the connection between the circuit 10 and the apparatus 30 for communications between them.

The charging circuit 20 may further comprise the control module 24 as already described. The control module 24 of the charging circuit 20 may forward the request for providing processing resources of the vehicle 100 via the one or more interfaces 22. The control module 24 may further forward information on the available processing capacities of the vehicle 100, which were estimated by the control module 14 of the circuit 10, from the circuit 10 to the apparatus 30. Further, the control module 24 may forward information on a processing task from the apparatus 30 to the circuit 10. The processing task may be a user-defined operation like, for example, an application performing calculations, graphics rendering, simulations etc.

The control module 24 may further forward information on results of the processing task or user-defined operation from the circuit 10 to the apparatus 30. In case of a processing task being performed by the processing resource of the vehicle 100, the charging circuit 20 may check the state of the task to be processed and may transmit corresponding (state, update) information to the apparatus 30.

Fig. 3 shows an apparatus 30 for a server 300 and for assigning available processing capacities of charging vehicles 100 (see Fig. 1). Fig. 3 further illustrates an optional example of a server 300 comprising the example of the apparatus 30. The apparatus 20 (see Fig. 2) may comprise one or more interfaces 32, which are configured to communicate with a charging circuit 20 and with a circuit 40 (see Fig. 4) requesting a provision of processing resources. The circuit 20 may further comprise a control module 34, which is coupled to the one or more interfaces 32. The control module 34 is configured to receive a request for available processing resources from the circuit 40 using the one or more interfaces 32. The control module 34 is further configured to receive information on available processing capacities from a circuit 10 (see Fig. 1) via the charging circuit 20 using the one or more interfaces 32. Further, the control module 34 is configured to predict at which time processing capacities from the circuit 10 are available based on previously received information on available processing capacities. The control module 34 is further configured to assign available processing capacities from the circuit 10 to the circuit 40 using the one or more interfaces 32.

In other words, the apparatus 30 may comprise one or more interfaces 32 and a control module 34. The one or more interfaces 32 may enable a connection to the charging circuit 20, as explained above. The apparatus 30 may further be connected to the circuit 40 for the device 400. The connection between the apparatus 30 and the circuit 40 may provide for respective communications between the same.

The control module 34 may receive a request for available processing resources from the circuit 40 via the one or more interfaces 32. The information on the available processing capacities may be estimated by the circuit 10, forwarded to the apparatus 30 via the charging circuit 20 and received by the apparatus 30. The apparatus 30 may further predict at which time processing capacities from the circuit 10 are available based on the received information on available processing capacities. This means that the control module 34 of the apparatus 30 may check at which time and how long the battery of the vehicle 100 may need to be charged at the charging station 200. Based on the collected information and based on the statistics thereof, the control module 34 of the apparatus 30 may predict at which time which processing capacities are available. Once the processing capacities are sufficient for performing a requested user-defined operation, the processing resources of the vehicle 100 may be assigned to the respective user in response to his request via the one or more interfaces 32.

A maximum of available processing capacities may be reached at night, when most vehicles 100 may charge their batteries at charging stations 200. At that time, most of the processing resources of the vehicles 100 might not be used. Hence, in an example, a certain amount of processing resources may be reproducibly available over certain hours at night. Monitoring the statistics of available processing resources over night may hence lead to a reliable prediction.

Further, the control module 34 may generate a first channel for data transmissions of user-defined requests from the circuit 40 for using processing resources to the apparatus 30 for the server 300. The control module 34 may further be configured to map the requests for available processing capacities on a list including all the available processing capacities and may generate a resource list of the available processing capacities. Furthermore, the control module 34 may generate a second channel for a user-defined operation performed by the available processing resources of the vehicle 100, based on the resource list showing mapped requests to available processing capacities. The control module 34 may further add a security layer to accommodate user privacy and anonymity for the circuit 10 for sharing processing resources and the circuit 40 for using processing resources during data transmissions from the circuit 10 for using processing resources to the apparatus 30 and providing user-defined operations from the circuit 10 to the circuit 40. This may improve the assignment of the available processing capacities in a more efficient way and may make it more secure for the users by adding a security layer.

The control module 34 may be configured to receive information on a compensation from the circuit 40. Furthermore, the control module 34 may be configured to provide available processing capacities for user-defined operations in response to the received information on the compensation. The control module 34 may further be configured to provide information on a fraction of the compensation to the circuit 10 and to provide information on another fraction of the compensation to a service provider. The named compensation may also be financial transaction. For example, such compensation may represent a priority, a payment, a credit, etc.

Fig. 4 shows a circuit 40 for a device 400. The circuit 40 is configured to use processing resources. For example, such processing resources may be those of a vehicle 100. Fig. 4 further illustrates an optional example of a device 400 comprising the example of the circuit 40. The device 400 may be a vehicle, a computer, a handheld, any device that uses processing resources. The circuit 40 comprises one or more interfaces 42 configured to communicate with an apparatus 30 for a server 300. The circuit further comprises a control module 44, which is coupled to the one or more interfaces 42. The control module 44 is configured to transmit a request for processing capacities to the apparatus 30 using the one or more interfaces 42. Further, the control module 44 is configured to receive information on available processing capacities of a vehicle 100 from the apparatus 30 using the one or more interfaces 42, and use provided available processing capacities for a user-defined operation using the one or more interfaces 42.

In other words, the circuit 40 may comprise one or more interfaces 42 and a control module 44. The one or more control interfaces 42 may enable a connection between the circuit 40 and the apparatus 30. This connection enables communication between the same. The communication may, for example, comprise transmitting requests to the circuit 10 (via apparatus 30 and charging circuit 20) or receiving information from the apparatus 30 (e.g. on available processing resources).

The request for processing capacities may be transmitted if the processing resources of the circuit for using processing resources may be overloaded. In case, the processing resources of the circuit 40 are overloaded, a request on processing capacities may automatically be transmitted in order to continue running the user-defined operation.

The device 400 may, for example, be a vehicle, an electric vehicle, a computer, a tablet, a smartphone or a TV. The device 400 may be any kind of hardware needing processing capabilities being able to perform user-defined operations

Fig. 5 shows an example of a system 500 for sharing processing resources. The system 500 comprises examples of a circuit 10 for sharing processing resources of a vehicle 100, a charging circuit 20 for a charging station 200, an apparatus 30 for a server 300 and for assigning available processing capacities of charging vehicles 100, and a circuit 40 for a device 400 and for using processing resources of a vehicle 100 as described in the corresponding Figs. 1 to 4.

Summarizing an example, information on available processing resources at charging vehicles 100 is administrated at the server 300. This information can be collected via the charging station 200 to which vehicles 100 connect while charging. Processing resources are monitored and assigned at the server 300. Any user may request processing resources using a user device 400 to send such a request to the server 300. The server 300 can then assign available processing resources to the according request and forward/relay the respective information.

In examples the one or more interfaces 12, 22, 32, 42 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 12, 22, 32, 42 may comprise further components to enable according communication in a communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 12, 22, 32, 42 may be coupled to one or more antennas or ports. In some examples the one or more interfaces 12, 22, 32, 42 may serve the purpose of transmitting or receiving or both, transmitting and receiving, information, such as information, input data, control information, further information messages, etc.

The respective one or more interfaces 12, 22, 32, 42 are coupled to the respective control modules 14, 24, 34, 44. In examples the control modules 14, 24, 34, 44 may be implemented using one or more processing units, one or more processing devices, any means for processing, such as a processor, a computer or a programmable hardware component being operable with accordingly adapted software. In other words, the described functions of the control modules 14, 24, 34, 44 may as well be implemented in software, which is then executed on one or more programmable hardware components. Such hardware components may comprise a general-purpose processor, a Digital Signal Processor (DSP), a microcontroller, etc.

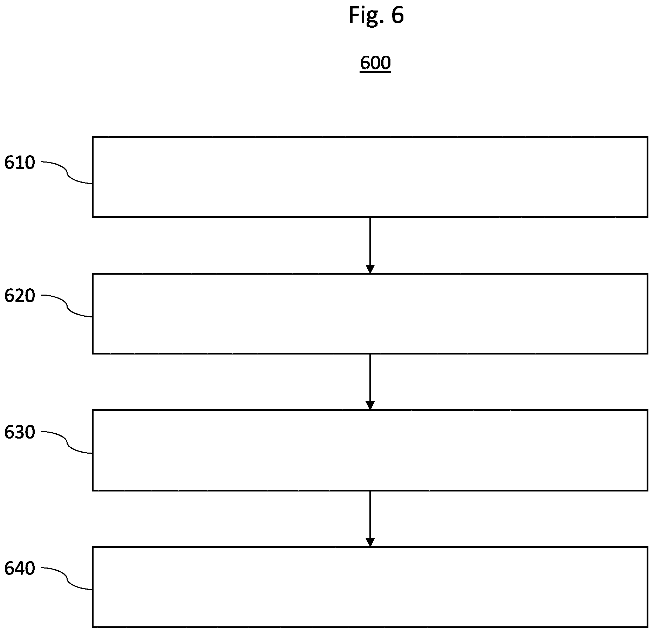

In order to summarize the above aspects on sharing processing resources, Figs. 6 to 9 further illustrate flowcharts of the methods corresponding to the above explained aspects.

Fig. 6 illustrates a flowchart describing a method 600 for sharing processing resources of a vehicle 100. The method 600 comprises controlling 610 processing resources of the vehicle 100, receiving 620 a request on processing resources, estimating 630 available processing capacities of the vehicle 100, and providing 640 available processing capacities of the vehicle 100 for an external processing task while being connected to the charging circuit 200.

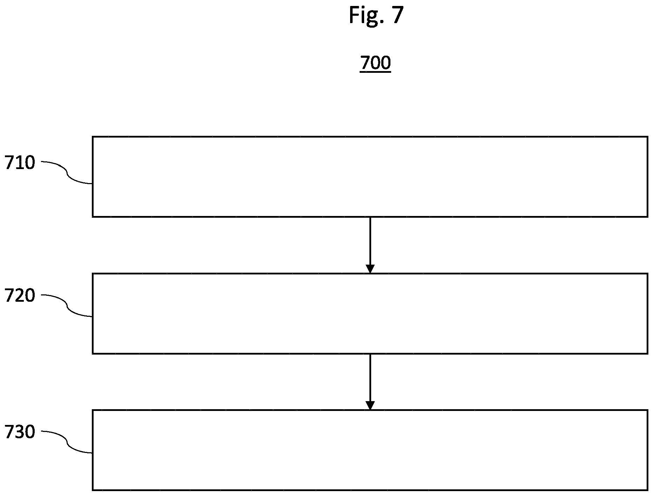

Fig. 7 illustrates a flowchart describing a method 700 for charging and sharing processing resources. The method 700 comprises forwarding 710 a request for providing processing resources from an apparatus 30 for a server 300 to a circuit 10 for sharing processing resources of the vehicle 100, forwarding 720 information on available processing capacities of the vehicle to the apparatus for the server, and forwarding 730 information on a processing task.

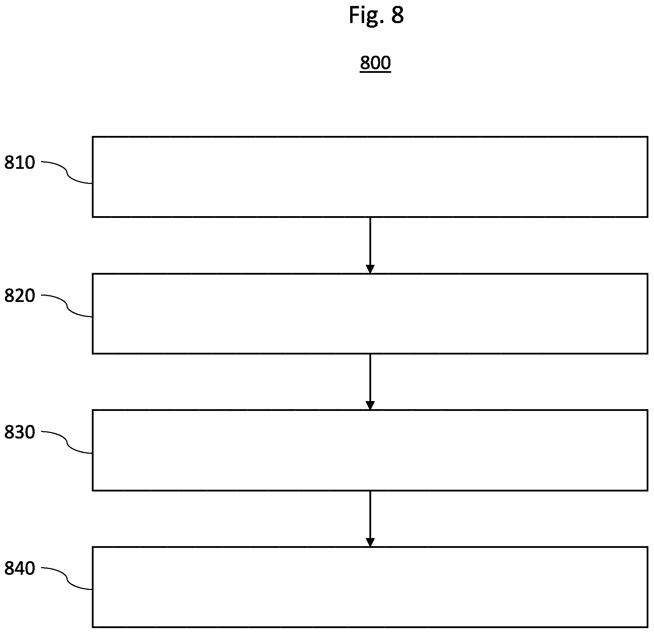

Fig. 8 illustrates a flowchart describing a method 800 for assigning available processing capacities of charging vehicles 100. The method 800 comprises receiving 810 a request on the provision of processing resources from a requesting circuit 40, receiving 820 information on available processing capacities from a providing circuit 10, predicting 830 at which time processing capacities from the providing circuit 10 are available based on previously received information on available processing capacities, and assigning 840 available processing capacities from the providing circuit 10 for sharing processing resources to the requesting circuit 40 for using processing resources.

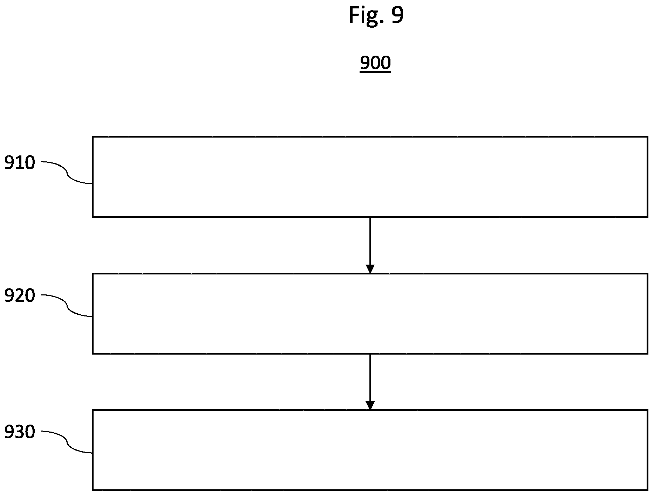

Fig. 9 illustrates a flowchart describing a method 900 for using processing resources of a vehicle 100. The method 900 comprises sending 910 a request for processing capacities to an apparatus 30 at a server 300, receiving 920 information on available processing capacities of the vehicle 100 from the apparatus 30 for the server 300, and using 930 provided available processing capacities for a user-defined operation.

A further example is a system method combining the above-described individual methods.

A principle of examples is to allow any user of an electric vehicle with a GPU to be able to offer his or her vehicle's GPUs. The otherwise unused resources may hence be made available to other users. At least in some examples a marketplace or ecosystem may be used for other users, potentially also those using an electric vehicle, to also access GPUs for artificial intelligence (AI)/deep learning use cases, rendering, simulation, or any high performance computing application that requires multiple GPUs.

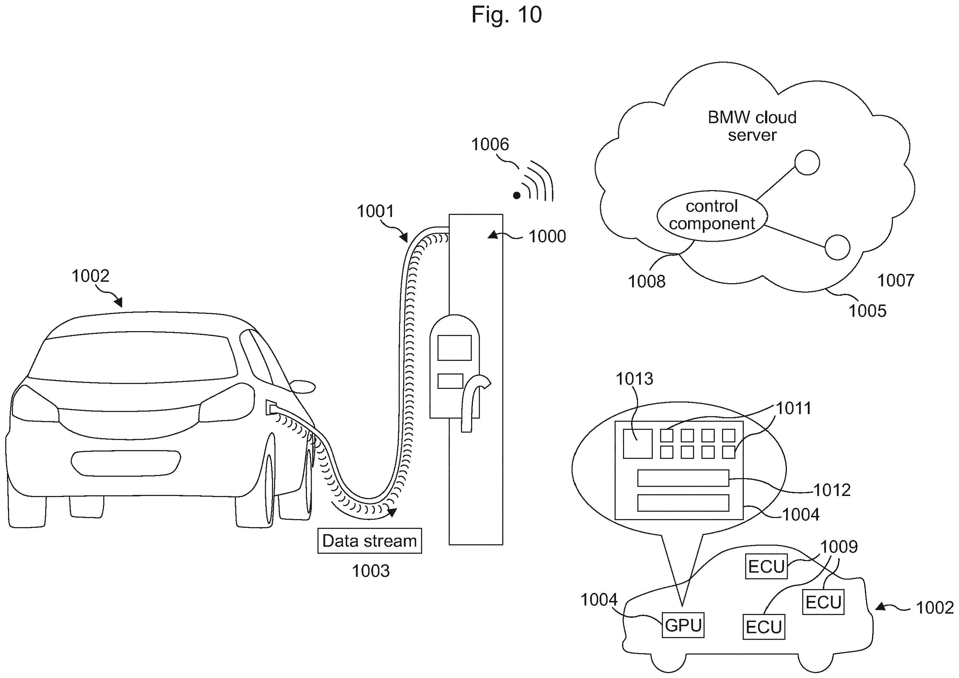

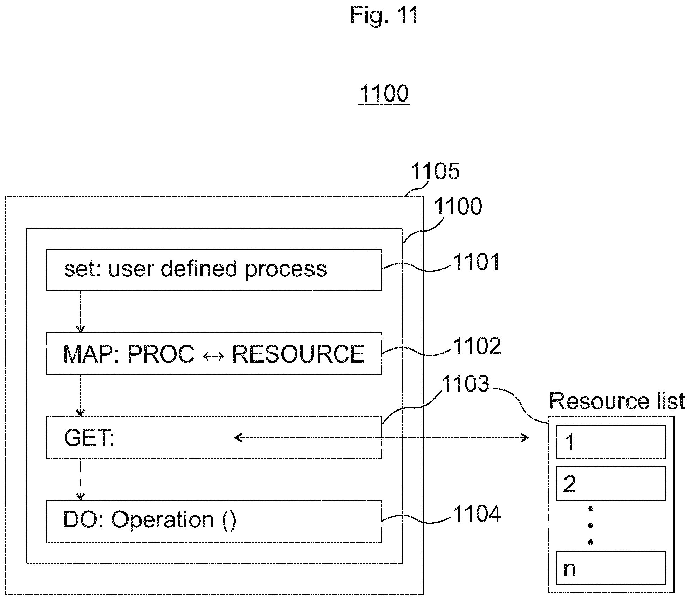

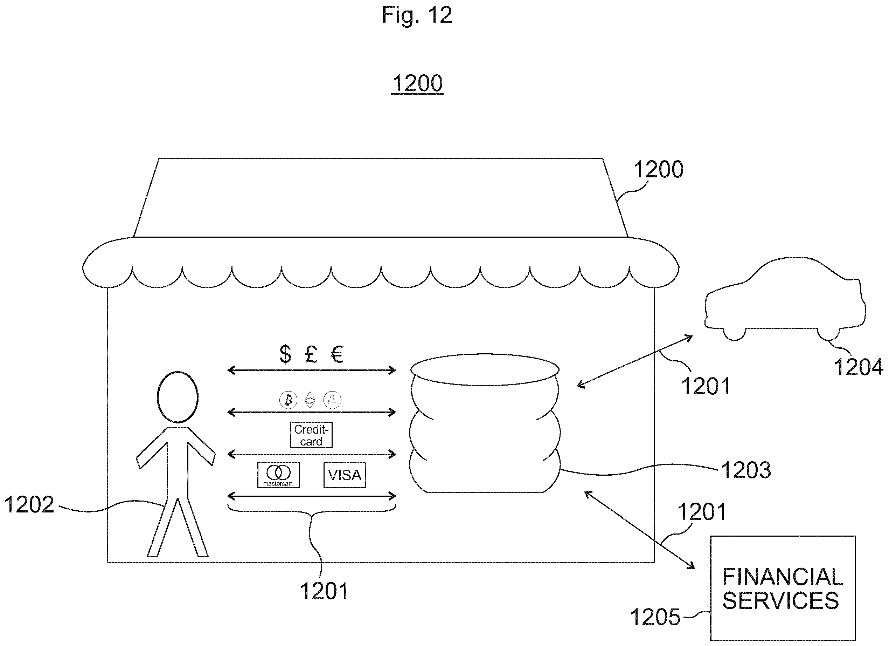

This concept may be implemented through the examples described herein. Fig. 10 schematically illustrates an example of a system for sharing processing resources of vehicles. Fig. 11 schematically illustrates an example of a method 1100 for sharing processing resources of vehicles. Fig. 12 schematically illustrates an example of a method 1200 for assigning resources of a vehicle to users. A system as described herein may allow centralized user transactions for GPU computation use by other owners of vehicles in an ecosystem. This may be implemented by a method 1100 that possesses the ability to assign matches based on available GPU resources and user requests, as well as an added security layer feature 1105.

Fig. 10 illustrates another example scenario with a vehicle 1002 on the left, a charging station 100 in the center and a cloud server 1005 embedded in a cloud-system 1007 on the right. The vehicle 1002 is further illustrated on the lower right in Fig. 10 showing some of its components, such as electronic control units (ECUs 1009, one or more GPUs 1004, with an instruction fetch/decoder 1013, potentially multiple cores 1011, a memory controller 1012, etc.).

Considering a charging waypoint station 1000, as an example of the above charging station 200, Fig. 10 shows a wired connection 1001 established between the station 1000 and a fleet vehicle 1002. The fleet vehicle 1002 is an example of the above vehicle 100. For example, an additional data stream 1003 passes between the station 1000 and the vehicle 1002 by means of the wired connection 1001. Information on vehicle system diagnostics pertinent to the GPU 1004 may be determined. Fig. 10 shows the vehicle 1002 also at the lower right corner with further details. These vehicle GPU data diagnostics will then be sent back to a cloud-based server 1005, an example of the above server 300, which will provide data required in system 1200 (shown in Fig. 12) and a real-time updating cache 1103 referenced in the method 1100 (shown in Fig. 11). The vehicle GPU data diagnostics are sent back using charging waypoint telematics 1006 into the cloud-based system 1007. A control component 1008 may be used in the cloud system 1007 in order to process commands sent from the system 1200 and method 1100. This control component 1008 may use information from the vehicle's components 1004 to access a plurality of electric control units 1009 that will permit modulation of the GPUs inside a fleet vehicle 1002.

In an example as shown in Fig. 11, a method 1100 may comprise three components. A first component will provide a channel for user-defined processes 1101. More generally, this will be data transmissions of user defined requests. The second component of the method will be a real-time mapping 1102 of requests to accessible resources. The accessible resources will be listed in an updating cache data structure that will depend on GPU-empowered vehicles that are connected to a grid (fleet of example vehicles 100). The third component will be a channel for getting an operation 1103 based on the mapping provided in 1102. An added security layer feature will be included 1105 (security enclosure protocol) to accommodate user privacy and anonymity, likewise improving vehicular safety and mitigating the risk of system tampering. In Fig. 11 the get-operation 1103 is configured to obtain information from a resource list. The do-operation 1104 corresponds to the edge that retrieves the data from the resource list (included in 1105) that includes a fleet of example vehicles 100 and allows the user defined process 1101 to perform the do operation 1104.

As shown in Fig. 12 a revenue stream may be enabled. In order for the three part method described in Fig. 11 to execute components 1101, 1102, and 1103, an ecosystem may ne be entered in the form of a centralized application. In order for a user to enter the platform, he or she may transact a small fee amortized by time. Consider that 1200 may exemplify a full stack application-based marketplace. If so, 1201 may embody any payment channel, e.g. between a user 1202 (device 400) and the backend server 1203 (server 300). This payment channel may then complete a transaction by sending a fraction of the payment to the provider 1204, and a fixed percentage of the transaction to service provider 1205. These payments are examples of the above compensation/compensation information.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A circuit (10) for sharing processing resources of a vehicle (100; 1002), comprising:
one or more interfaces (12) configured to connect to a charging circuit (20) for the vehicle (100; 1002) and to communicate with a server entity (30); and
a control module (14; 1009) configured to:
control processing resources of the vehicle (100; 1002);
receive a request for providing processing resources using the one or more interfaces (12);
estimate available processing capacities of the vehicle (100; 1002); and
provide available processing capacities of the vehicle (100; 1002) for an external processing task while being connected to the charging circuit (20).

2. The circuit (10) of claim 1, wherein the one or more interfaces (12) are configured to establish a wired connection to the circuit (20) while charging, wherein the one or more interfaces (12) are further configured to communicate a data stream and information on an updated state of the available processing capacities through the wired connection.

3. A charging circuit (20) for a charging station (200; 1000), comprising:
one or more interfaces (22) configured to connect to a circuit (10) for sharing processing resources of a vehicle (100; 1002) while charging a battery of the vehicle (100; 1002) and to communicate with an apparatus (30) for a server (300; 1005); and a control module (24) configured to:
forward a request for providing processing resources from the apparatus (30) to the circuit (10) using the one or more interfaces (22);
forward information on available processing capacities of the vehicle (100; 1002) from the circuit (10) to the apparatus (30) using the one or more interfaces (22); and
forward information on a processing task from the apparatus (30) to the circuit (10) using the one or more interfaces (22).

4. The charging circuit (20) of claim 3, wherein the control module (24) is further configured to forward information on results of the processing task from the circuit (10) to the apparatus (30).

5. An apparatus (30) for a server (300; 1005) and for assigning available processing capacities of charging vehicles (100; 1002), comprising:
one or more interfaces (32) configured to communicate with a charging circuit (20) and with a circuit (40) requesting a provision of processing resources; and
a control module (34; 1008) configured to:
receive a request for available processing resources from the circuit (40) using the one or more interfaces (32);
receive information on available processing capacities from a circuit (10) via the charging circuit (20) using the one or more interfaces (32);
predict at which time processing capacities from the circuit (10) are available based on previously received information on available processing capacities; and
assign available processing capacities from the circuit (10) to the circuit (40) using the one or more interfaces (32).

6. The apparatus (30) of claim 5, wherein the time for predicted available processing capacities is based on statistics of a charging times of the vehicle (100; 1002).

7. The apparatus (30) of any one of claims 5 or 6, wherein the control module (34; 1008) is further configured to:
generate a first channel for data transmissions of user-defined requests from the circuit (40) to the apparatus (30);
map the requests for available processing capacities on a list comprising the available processing capacities;
generate a second channel for a user-defined operation performed by the available processing resources of the vehicle (100; 1002) based on the mapped requests to available processing capacities; and
add a security layer to accommodate user privacy and anonymity for the circuit (10) and the circuit (40) during data transmissions from the circuit (40) to the apparatus (30) and providing user-defined operations from the circuit (10) to the circuit (40).

8. The apparatus (30) of any one of claims 5 to 7, wherein the control module (34; 1008) is further configured to:
receive information on a compensation from the circuit (40);
provide available processing capacities for user-defined operations in response to the received information on the compensation; and
provide information on a fraction of the compensation to the circuit (10) for sharing processing resources of the vehicle (100; 1002) and provide information on another fraction of the compensation to a service provider.

9. A circuit (40) for a device (400) and for using processing resources, comprising:
one or more interfaces (42) configured to communicate with an apparatus (30) for a server (300; 1005); and
a control module (44) configured to:
transmit a request for processing capacities to the apparatus (30) using the one or more interfaces (42);
receive information on available processing capacities from the apparatus (30) using the one or more interfaces (42); and
use provided available processing capacities for a user-defined operation.

10. The circuit (40) of claim 9, wherein the request for processing capacities is transmitted if the processing resources of the circuit (40) are overloaded.

11. A method (600) for sharing processing resources of a vehicle (100; 1002), comprising:
controlling (610) processing resources of the vehicle (100; 1002);
receiving (620) a request on processing resources;
estimating (630) available processing capacities of the vehicle (100; 1002); and
providing (640) available processing capacities of the vehicle (100; 1002) for an external processing task while being connected to the charging circuit (20).

12. A method (700) for charging and sharing processing resources, comprising:
forwarding (710) a request for providing processing resources from an apparatus (30) for a server (300; 1005) to a circuit (10) for sharing processing resources of the vehicle (100; 1002);
forwarding (720) information on available processing capacities of the vehicle (100; 1002) to the apparatus (30) for the server (300; 1005); and
forwarding (730) information on a processing task from the apparatus (30) for the server (300; 1005) to the circuit (10) for sharing resources of the vehicle (100; 1002).

13. A method (800) for assigning available processing capacities of charging vehicles (100; 1002), comprising:
receiving (810) a request on the provision of processing resources from a requesting circuit (40);
receiving (820) information on available processing capacities from a providing circuit (10);
predicting (830) at which time processing capacities from the providing circuit (10) are available based on previously received information on available processing capacities; and
assigning (840) available processing capacities from the providing circuit (10) to the requesting circuit (40).

14. A method (900) for using processing resources, comprising:
sending (910) a request for processing capacities to an apparatus (30) at a server (300; 1005);
receiving (920) information on available processing capacities of the vehicle (100; 1002) from the apparatus (30); and
using (930) provided available processing capacities for a user-defined operation.

15. A computer program having a program code for performing the methods of claims 11 to 14, when the computer program is executed on a computer, a processor, or a programmable hardware component.
